# FASCICULE DE BREVET EUROPEEN

(11) **EP 1 055 364 B1**
(45) Date de publication et mention de la délivrance du brevet: **01.10.2003**
(21) Numéro de dépôt: 00440152.7
(22) Date de dépôt: 22.05.2000
(51) Int. Cl.: A01G 27/04

(54) **Dispositif de jardinière obtenue par rotomoulage.**
Durch Rotationsformen hergestellte Pflanzentroganordnung
Window box arrangement obtained by rotational moulding

(30) Priorité: 26.05.1999 FR 9906747
(43) Date de publication de la demande: 29.11.2000
(73) Titulaire: Grigi, Bernard, 39570 Geruge (FR)
(72) Inventeur: Grigi, Bernard, 39570 Geruge (FR)
(74) Mandataire: Rhein, Alain

(56) Documents cités:
- EP-A- 0 688 497
- DE-A- 4 221 462
- DE-U- 8 525 768
- FR-A- 2 400 323
- FR-A- 2 621 450
- GB-A- 1 096 014
- GB-A- 2 018 115
- US-A- 2 659 180
- US-A- 4 858 381

## Description

L'invention concerne un dispositif de jardinière obtenue par rotomoulage et définie par un corps creux délimité par une enveloppe comportant deux parois de section, sensiblement, en « U » et délimitées, chacune, par un fond, lesdites parois étant disposées, d'une part, l'une à l'intérieur de l'autre et, d'autre part, à une certaine distance l'une de l'autre, tandis que le fond de la paroi externe se situe en regard et à une certaine distance du fond de la paroi interne, cette dernière définissant un bac destiné à recevoir de la terre tandis que la paroi externe constitue une réserve d'eau dont le niveau supérieur se situe à une certaine distance du fond de la paroi interne.

La présente invention concerne le domaine de la fabrication de jardinières en matériau synthétique obtenues par la technique du rotomoulage.

L'on connaît, d'ores et déjà, un certain nombre de jardinières destinées à contenir de la terre ou analogue dans laquelle vont être plantés des végétaux tels que des plantes vertes, des légumes ou autres.

Une telle jardinière est, alors, constituée par un corps creux délimité par une enveloppe comportant une paroi interne apte à définir un bac destiné à contenir cette terre. Un tel bac présente, usuellement, un fond fermé de sorte qu'il subsiste, généralement, un excédent d'eau susceptible de stagner dans ce bac alors même que la terre semble déshydratée, du moins en surface. Une telle stagnation risque de trop mouiller la terre et, de ce fait, de faire pourrir les plantes.

Il est, également, connu au travers du document DE 85 25 768 U une jardinière obtenue par rotomoulage et définie par un corps creux délimité par une enveloppe comportant deux parois de section, sensiblement, en « U » et délimitées, chacune, par un fond, lesdits fonds se situant en regard et à une certaine distance l'un de l'autre. Ces parois sont disposées, d'une part, l'une à l'intérieur de l'autre et, d'autre part, à une certaine distance l'une de l'autre. La paroi interne définit un bac destiné à recevoir de la terre tandis que la paroi externe constitue une réserve d'eau dont le niveau supérieur se situe à une certaine distance du fond de la paroi interne.

Cette jardinière comporte, au niveau de sa paroi interne, un orifice pour le remplissage de la réserve d'eau. A ce propos, on observera que, lorsque la jardinière contient des plantes ou analogue, il est particulièrement difficile d'accéder à cet orifice et, par conséquent, d'assurer le remplissage de ladite réserve d'eau.

De plus, le fond de la paroi interne présente un puits s'étendant en direction du fond de la paroi externe et recevant une mèche ou analogue s'étendant dans le bac à terre. On observera que le fond de ce puits comporte au moins un orifice apte à autoriser le passage de l'eau à l'intérieur dudit puits pour son acheminement dans le bac à terre par l'intermédiaire de ladite mèche. Aussi, pour permettre un pompage de l'eau par la mèche, il est indispensable que ce puits soit constamment immergé dans l'eau de la réserve, au moins au niveau de son fond pourvu du ou des orifices. Il en résulte qu'il ne peut y avoir aucune circulation d'air, au travers de ce puits, entre, d'une part, le volume interne du bac à terre et, d'autre part, le volume interne délimité par la paroi externe. Ainsi, la conception particulière de cette jardinière ne permet aucunement, en position d'arrosage automatique, d'assurer une oxygénation de la terre contenue dans la bac à terre. Ce défaut d'oxygénation conduit à un pourrissement des racines des plantes ou analogue contenues dans le bac à terre.

La présente invention permet de remédier aux inconvénients des jardinières de l'état de la technique.

A cet effet, la présente invention concerne un dispositif de jardinière obtenue par rotomoulage et définie par un corps creux délimité par une enveloppe comportant deux parois de section, sensiblement, en « U » et délimitées, chacune, par un fond, lesdites parois étant disposées, d'une part, l'une à l'intérieur de l'autre et, d'autre part, à une certaine distance l'une de l'autre, tandis que le fond de la paroi externe se situe en regard et à une certaine distance du fond de la paroi interne, cette dernière définissant un bac destiné à recevoir de la terre tandis que la paroi externe constitue une réserve d'eau dont le niveau supérieur se situe à une certaine distance du fond de la paroi interne, caractérisé par le fait que la paroi externe comporte au moins une ouverture destinée à permettre l'alimentation en eau de la réserve d'eau tandis que la paroi interne comporte, au niveau de son fond, au moins une cheminée faisant saillie vers l'intérieur du bac à terre et dont la paroi périphérique est percée d'au moins un orifice apte à être traversé par une mèche, d'une part, s'étendant à l'intérieur du bac à terre et, d'autre part, plongeant dans la réserve d'eau et apte à autoriser le passage de l'air à travers de la paroi interne (5).

Selon une autre caractéristique, la paroi externe est complétée par des moyens aptes à définir ledit niveau supérieur de l'eau en constituant un trop plein pour l'évacuation de son excès.

Une caractéristique additionnelle concerne le fait que les moyens aptes à définir ledit niveau supérieur de l'eau sont constitués par au moins un orifice de drainage pratiqué dans ladite paroi externe et situé, sous le niveau du fond de la paroi interne, à une certaine distance de ce fond.

Selon une autre caractéristique, de tels moyens aptes à définir ledit niveau supérieur de l'eau sont constitués par au moins une ouverture d'alimentation en eau située, au moins en partie, sous le niveau du fond de la paroi interne et à une certaine distance de ce fond.

Une caractéristique additionnelle est relative au fait que ladite ouverture résulte d'un retrait de matière opéré au niveau de la paroi externe de la jardinière, après son rotomoulage.

Selon une autre caractéristique, cette ouverture est délimitée par une portion de ladite paroi externe ayant été indexée, fragilisée et/ou prédécoupée.

Une autre caractéristique concerne le fait que ladite jardinière comporte, dans sa partie inférieure et au niveau de sa paroi externe, une excroissance périphérique s'étendant au niveau de l'un au moins des cotés de ladite paroi externe ét comportant, sur le dessus, au moins une ouverture d'alimentation en eau.

En fait, cette excroissance périphérique présente des dimensions, hors tout, sensiblement supérieures à celles de la paroi externe de la jardinière de manière à ménager, lorsque deux jardinières sont juxtaposées, un espace suffisant entre ces dernières pour assurer le remplissage de leurs réserves d'eau.

Une caractéristique additionnelle concerne le fait que ladite excroissance périphérique s'étend sur tout le pourtour de ladite paroi externe et adopte, sensiblement, la forme d'une coupelle, d'une soucoupe ou analogue similaire à celle destinée à compléter une jardinière en terre cuite.

Les avantages de la présente invention concernent le fait que le volume interne du corps creux d'une jardinière obtenue par rotomoulage est mis à profit pour constituer une réserve d'eau indépendante d'un bac destiné à contenir la terre. L'apport d'eau au niveau de cette dernière est réalisé au travers d'une humidification nécessaire et suffisante assurée par l'intermédiaire d'une mèche apte, d'une part, à tremper dans l'eau et, d'autre part, à s'étendre dans la terre.

La disposition des ouvertures d'alimentation en eau et/ou des orifices de drainage permet de constituer un trop plein d'évacuation d'eau et d'imposer, à cette dernière, un niveau supérieur situé à une certaine distance du fond du bac à terre. Ceci évite à cette dernière d'être en contact direct avec l'eau et préserve les végétaux de tout pourrissement.

De plus, la différence de niveau entre l'eau et le fond du bac à terre autorise une circulation d'air ce qui permet, avantageusement, d'aérer cette terre.

L'invention est exposée plus en détail dans la description qui va suivre se rapportant à des modes de réalisation qui ne sont donnés qu'à titre d'exemples indicatifs et non limitatifs.

La compréhension de cette description sera facilitée en se référant au dessin joint en annexe et dans lequel :
La figure 1 est une vue schématisée et en perspective d'une jardinière selon l'invention ;
La figure 2 est une vue schématisée, en coupe longitudinale et partielle, de la jardinière représentée figure 1 ;
La figure 3 est une vue schématisée, partielle et de dessus d'une telle jardinière ;

La présente invention concerne le domaine de la fabrication de jardinières obtenues à partir d'un matériau synthétique et par la technique du rotomoulage.

Une telle jardinière 1 est, en fait, définie par un corps creux 2 présentant un volume interne 3 délimité par une enveloppe 4.

Cette dernière se présente sous la forme de deux parois 5, 6 de section sensiblement en « U » et délimitées, chacune et respectivement, par un fond 7, 8 et des parois latérales 9, 10.

Les parois 5 et 6 de cette enveloppe 4 sont disposées, d'une part, l'une 5 à l'intérieur de l'autre 6 de manière à définir une paroi interne 5 et une paroi externe 6 et, d'autre part, de telle sorte que leurs fonds 7 et 8 soient en regard l'un de l'autre.

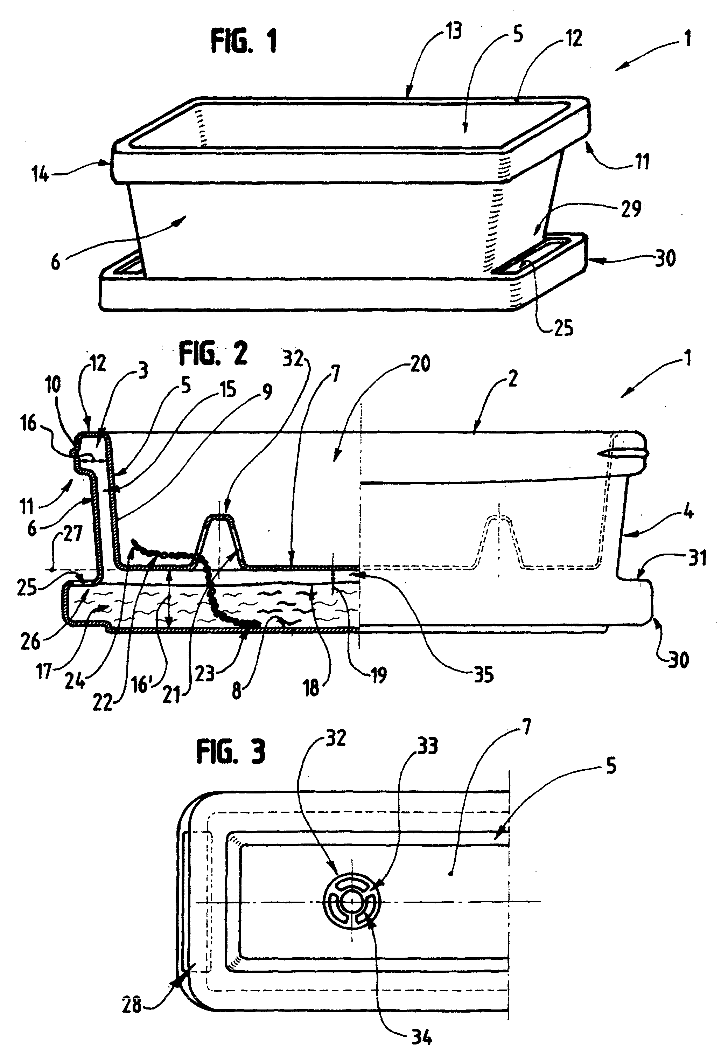

Tel que visible, plus particulièrement, sur la figure 2, la continuité de ladite enveloppe 4, entre les parois interne 5 et externe 6, est assurée, au moins, en partie supérieure 11 de ladite jardinière 1 et par l'intermédiaire d'un rebord supérieur 12 apte à relier l'extrémité supérieure des parois latérales 9 et 10 de ces deux parois 5 et 6. Ce rebord supérieur 12 est défini lors du rotomoulage et s'étend en bordure supérieure 13 de ladite jardinière 1, sur tout le pourtour 14 de cette dernière.

Comme visible sur cette même figure, lesdites parois interne 5 et externe 6 présentent, entre elles, un espacement 15 et se situent, par conséquent, à une certaine distance 16 l'une 5 de l'autre 6 de manière à délimiter le volume interne 3 dudit corps creux 2.

Selon l'invention, le fond 7 de la paroi interne 5 est situé à une certaine distance 16' du fond 8 de la paroi externe 6.

L'espacement entre ces deux fonds 7, 8 est mis à profit pour que ladite paroi externe 6 définisse une réserve d'eau 17. Cette dernière présente un niveau supérieur 18 se situant à une certaine distance 19 du fond 7 de la paroi interne 5.

Cette dernière 5 définit, en fait, un bac 20 destiné à recevoir de la terre et comporte, au niveau de son fond 8, au moins un orifice 21 apte à être traversé par une mèche 22. Cette dernière est destinée, en partie, à plonger dans ladite réserve d'eau 17, au moins au travers de l'une 23 de ses extrémités 23, 24, cette mèche 22 traversant ledit orifice 21 pour venir s'étendre, en partie, dans ledit bac 20. C'est dans ce dernier que ladite mèche 22 vient à être intimement incorporé à la terre en vue de son humidification, par capillarité.

On observera que ladite paroi externe 6 comporte, de plus, au moins une ouverture 25 destinée à l'alimentation en eau de ladite réserve 17.

Selon une caractéristique additionnelle de la présente invention, la paroi externe 6 est complétée par des moyens 26 aptes à définir ledit niveau supérieur 18 de la réserve d'eau 17. De tels moyens 26 constituent, en fait, un trop plein pour l'évacuation de l'eau en excès de manière à éviter que cette eau ne remonte dans le bac 20 à terre.

Une première solution, non représentée, consiste à ménager, au niveau de la paroi externe 6, au moins un orifice de drainage, ce dernier étant situé, sous le niveau 27 du fond 7 de la paroi interne 5, et à une certaine distance 19 de ce fond 7.

Selon un mode préféré de réalisation de la présente invention, de tels moyens 26 sont constitués par au moins une ouverture 25 d'alimentation en eau. Cette ouverture 25 est alors, au moins en partie, située sous le niveau 27 du fond 7 de la paroi interne 5, et à une certaine distance 19 de ce fond 7.

En ce qui concerne une telle ouverture 25, celle-ci peut être définie, directement, lors du rotomoulage.
Cependant et selon un mode de réalisation préféré, cette ouverture 25 résulte d'un retrait de matière opéré au niveau de la paroi externe 6 de la jardinière 1, après rotomoulage de cette dernière.

En fait, une telle ouverture 25 peut être délimitée par une portion 28 de ladite paroi externe 6 au niveau de laquelle cette dernière a été indexée, fragilisée et/ou prédécoupée en vue de faciliter un tel retrait de matière.

En particulier, au travers d'une telle indexation, il est possible de positionner exactement l'emplacement au niveau duquel, après rotomoulage, il doit être pratiqué une ouverture 25 à l'aide d'un outil approprié, notamment une scie, une meule, d'une fraise ou analogue.

En fragilisant une portion 28 de la paroi externe 6, il suffit, par exemple, de briser cette dernière pour définir ladite ouverture 25.

Le prédécoupage de la portion 28 peut, par exemple, être défini sous la forme de pointillés constituant une amorce de rupture de ladite paroi externe 6.

Selon une autre caractéristique, une telle ouverture 25 peut, encore, être définie par une portion escamotable de ladite paroi externe 6.

Tel que visible sur les figures 1 et 2 du dessin en annexe, ladite jardinière 1 comporte, dans sa partie inférieure 29 et au niveau de sa paroi externe 6, une excroissance périphérique 30 s'étendant au niveau de l'un au moins des cotés de ladite paroi externe 6.

Une telle excroissance 30 présente, sur le dessus 31, au moins une ouverture 25 d'alimentation en eau ou, tout du moins, une portion 28 de paroi externe 6 destinée à être retirée.

En fait et tel que visible, notamment, sur les figures 2 et 3, une telle excroissance 30 présente des dimensions, hors tout, sensiblement supérieures à celles de la paroi externe 6 de la jardinière 1. Un tel mode de réalisation permet, lorsque deux jardinières 1 sont juxtaposées, de ménager un espace suffisant entre celles-ci pour autoriser un accès à l'ouverture 25 et, ainsi, permettre le remplissage des réserves 17 d'eau.

Selon un mode de réalisation préféré, une telle excroissance périphérique 30 s'étend sur tout le pourtour de ladite paroi externe 6 et adopte, sensiblement, la forme d'une coupelle, d'un plateau, d'une soucoupe ou analogue similaire à celle destinée à compléter une jardinière en terre cuite.

Une caractéristique additionnelle de la présente invention concerne le fait que le fond 7 de la paroi interne 5 comporte au moins une cheminée 32 faisant saillie vers l'intérieur du bac à terre. Une telle cheminée 32 présente une paroi périphérique 33 comportant au moins un orifice 34 pour le passage de la mèche 22.

Un tel orifice 34 peut, selon un mode préféré de réalisation et à l'instar de l'ouverture 25, être défini par une portion de paroi interne 5 apte à être retirée, après rotomoulage de la jardinière 1.

On observera qu'un tel orifice 34 peut encore autoriser le passage de l'air au travers de la paroi interne 5 en vue d'assurer une aération de la terre contenue dans le bac 20. A ce propos, on remarquera que, entre le niveau supérieur 17 de l'eau et le niveau 27 du fond 7 de la paroi interne 5, il est défini un canal 35 à l'intérieur duquel est susceptible de s'établir une circulation d'air entre, d'une part, la ou les ouvertures 25 et, d'autre part, le ou les orifices 34.

## Revendications

1. Dispositif de jardinière (1) obtenue par rotomoulage et définie par un corps creux (2) délimité par une enveloppe (4) comportant deux parois (5, 6) de section, sensiblement, en « U » et délimitées, chacune (5, 6), par un fond (7, 8), lesdites parois (5, 6) étant disposées, d'une part, l'une (5) à l'intérieur de l'autre (6) et, d'autre part, à une certaine distance (16) l'une (5) de l'autre (6), tandis que le fond (8) de la paroi externe (6) se situe en regard et à une certaine distance (16') du fond (7) de la paroi interne (5), cette dernière (5) définissant un bac (20) destiné à recevoir de la terre tandis que la paroi externe (6) constitue une réserve (17) d'eau dont le niveau supérieur (18) se situe à une certaine distance (19) du fond (7) de la paroi interne (5), **caractérisé par le fait que** la paroi externe (6) comporte au moins une ouverture (25) destinée à permettre l'alimentation en eau de la réserve d'eau (17) tandis que la paroi interne (5) comporte, au niveau de son fond (7), au moins une cheminée (32) faisant saillie vers l'intérieur du bac (20) à terre et dont la paroi périphérique (33) est percée d'au moins un orifice (34) apte à être traversé par une mèche (22), d'une part, s'étendant à l'intérieur du bac (20) à terre et, d'autre part, plongeant dans la réserve (17) d'eau et apte à autoriser le passage de l'air à travers la paroi interne (5).

2. Dispositif de jardinière (1) selon la revendication 1, **caractérisé par le fait que** la paroi externe (6) est complétée par des moyens (26) aptes à définir ledit niveau supérieur (18) de l'eau en constituant un trop plein pour l'évacuation de son excès.

3. Dispositif de jardinière (1) selon la revendication 2, **caractérisé par le fait que** les moyens (26) aptes à définir ledit niveau supérieur (18) de l'eau sont constitués par au moins un orifice de drainage pratiqué dans ladite paroi externe (6) et situé, sous le niveau (27) du fond (7) de la paroi interne (5), à une certaine distance (19) de ce fond (7).

4. Dispositif de jardinière (1) selon la revendication 2, **caractérisé par le fait que** les moyens (26) aptes à définir ledit niveau supérieur (17) de l'eau sont constitués par au moins une ouverture (25) d'alimentation en eau située, au moins en partie, sous le niveau (27) du fond (7) de la paroi interne (5) et à une certaine distance (19) de ce fond (7).

5. Dispositif de jardinière (1) selon l'une quelconque des revendications précédentes, **caractérisé par le fait que** ladite ouverture (25) résulte d'un retrait de matière opéré au niveau de la paroi externe (6) de la jardinière (1), après son rotomoulage.

6. Dispositif de jardinière (1) selon l'une quelconque des revendications précédentes, **caractérisé par le fait que** ladite ouverture (25) est délimitée par une portion (28) de ladite paroi externe (6) ayant été indexée, fragilisée et/ou prédécoupée.

7. Dispositif de jardinière (1) selon l'une quelconque des revendications précédentes, **caractérisé par le fait que** ladite jardinière (1) comporte, dans sa partie inférieure (29) et au niveau de sa paroi externe (6), une excroissance périphérique (30) s'étendant au niveau de l'un au moins des cotés de ladite paroi externe (6) et comportant, sur le dessus (31), au moins une ouverture (25) d'alimentation en eau.

8. Dispositif de jardinière (1) selon la revendication 7, **caractérisé par le fait que** ladite excroissance périphérique (30) présente des dimensions, hors tout, sensiblement supérieures à celles de la paroi externe (6) de la jardinière (1) de manière à ménager, lorsque deux jardinières sont juxtaposées, un espace suffisant entre ces dernières pour assurer le remplissage de leurs réserves d'eau (17).

9. Dispositif de jardinière (1) selon l'une quelconque des revendications 7 ou 8, **caractérisé par le fait que** ladite excroissance périphérique (30) s'étend sur tout le pourtour de ladite paroi externe (6) et adopte, sensiblement, la forme d'une coupelle, d'une soucoupe ou analogue.

## Patentansprüche

1. Pflanzentroganordnung (1), die durch Rotationsformen hergestellt und durch einen hohlen Körper (2) gebildet ist, der durch eine Ummantelung (4) abgegrenzt ist, umfassend zwei im Querschnitt im wesentlichen U-förmige Wände (5, 6), die (5, 6) jeweils durch einen Boden (7, 8) abgegrenzt sind, wobei die besagten Wände (5, 6) angeordnet sind, einerseits, die eine (5) innerhalb der anderen (6), und, andererseits, die eine (5) in einer gewissen Entfernung (16) von der anderen (6), während der Boden (8) der Außenwand (6) gegenüberstehend und in einer gewissen Entfernung (16') ab dem Boden (7) der Innenwand (5) liegt, wobei diese Letztere (5) einen Behälter (20) bildet, vorgesehen, Erde aufzunehmen, während die Außenwand (6) einen Vorratsbehälter (17) für Wasser darstellt, dessen obere Pegel (18) in einer gewissen Entfernung (19) ab dem Boden (7) der Innenwand (5) liegt, **dadurch gekennzeichnet, daß** die Außenwand (6) wenigstens eine Öffnung (25) umfaßt, vorgesehen, die Wasserzufuhr in den Wasserbehälter (17) zu erlauben, während die Innenwand (5) im Bereich ihres Bodens (7) wenigstens einen Schornstein (32) umfaßt, der in Richtung auf das Innere des Behälters (20) für Erde vorspringt und dessen Umkreiswand (33) mit wenigstens einer Bohrung (34) durchbohrt ist, geeignet, von einem Docht (22) durchsetzt zu werden, der sich, einerseits, im Inneren des Behälters (20) für Erde erstreckt, und, andererseits, in den Vorratsbehälter (17) für Wasser taucht, sowie geeignet, den Durchgang der Luft durch die Innenwand (5) zu erlauben.

2. Pflanzentroganordnung (1) nach Anspruch 1, **dadurch gekennzeichnet, daß** die Außenwand (6) durch Mittel (26) vervollständigt ist, die geeignet sind, den besagten oberen Pegel (18) des Wassers zu bestimmen, indem sie einen Überlauf für die Abfuhr des Überschusses desselben bilden.

3. Pflanzentroganordnung (1) nach Anspruch 2, **dadurch gekennzeichnet, daß** die Mittel (26), die geeignet sind, den besagten oberen Pegel (18) des Wassers zu bestimmen, durch wenigstens eine Drainageöffnung gebildet sind, die in der besagten Außenwand (6) vorgesehen ist und unter dem Niveau (27) des Bodens (7) der Innenwand (5), in einer gewissen Entfernung (19) ab diesem Boden (7), liegt.

4. Pflanzentroganordnung (1) nach Anspruch 2, **dadurch gekennzeichnet, daß** die Mittel (26), die geeignet sind, den besagten oberen Pegel (17) des Wassers zu bestimmen, durch wenigstens eine Öffnung (25) für die Wasserzufuhr gebildet sind, die sich wenigstens teilweise unter dem Niveau (27) des Bodens (7) der Innenwand (5) und in einer gewissen Entfernung (19) ab diesem Boden (7) befindet.

5. Pflanzentroganordnung (1) nach irgendeinem der vorgehenden Ansprüche, **dadurch gekennzeichnet, daß** die besagte Öffnung (25) sich aus einem Materialentfernung ergibt, die im Bereich der Außenwand (6) der Pflanzentroganordnung (1) nach ihrem Rotationsformen vorgenommen wird.

6. Pflanzentroganordnung (1) nach irgendeinem der vorgehenden Ansprüche, **dadurch gekennzeichnet, daß** die besagte Öffnung (25) durch einen Teil (28) der besagten Außenwand (6) abgegrenzt ist, die indexiert, brüchig gemacht und/oder in voraus ausgeschnitten wurde.

7. Pflanzentroganordnung (1) nach irgendeinem der vorgehenden Ansprüche, **dadurch gekennzeichnet, daß** die besagte Pflanzentroganordnung (1) in ihrem unteren Teil (29) und im Bereich ihrer Außenwand (6) eine Umkreisverdickung (30) umfaßt, die sich in dem Bereich von wenigstens der einen Seite der besagten Außenwand (6) erstreckt und auf der oberen Seite (31) wenigstens eine Öffnung (25) für die Wasserzufuhr umfaßt.

8. Pflanzentroganordnung (1) nach Anspruch 7, **dadurch gekennzeichnet, daß** die besagte Umkreisverdickung (30) Gesamtabmessungen aufweist, die im wesentlichen größer sind als jene der Außenwand (6) der Pflanzentroganordnung (1), um, wenn zwei Pflanzentroganordnungen nebeneinandergestellt werden, einen ausreichenden Raum zwischen diesen Letzteren zu verschaffen, um das Füllen ihrer Wasserbehälter (17) zu sichern.

9. Pflanzentroganordnung (1) nach irgendeinem der Ansprüche 7 oder 8, **dadurch gekennzeichnet, daß** die besagte Umkreisverdickung (30) sich auf dem ganzen Umfang der besagten Außenwand (6) erstreckt und im wesentlichen die Form einer kleinen Schale, einer Untertasse oder dergleichen annimmt.

## Claims

1. Window box arrangement (1) obtained by rotational moulding and defined by a hollow body (2) delimited by a casing (4) including two walls (5, 6) with a substantially U-shaped cross-section and each (5, 6) delimited by a bottom (7, 8), said walls (5, 6) being arranged, on the one hand, one (5) inside the other (6) and, on the other hand, at a determined distance (16) one (5) from the other one (6), while the bottom (8) of the outer wall (6) is located in front of and at a determined distance (16') from the bottom (7) of the inner wall (5), the latter (5) defining a trough (20) aimed at receiving earth, while the outer wall (6) forms a water tank (17) the upper level (18) of which is located at a determined distance (19) from the bottom (7) of the inner wall (5), **characterised in that** the outer wall (6) includes at least one opening (25) aimed at enabling the water supply to the water tank (17), while the inner wall (5) includes, at the level of its bottom (7), at least a chimney (32) protruding towards the inside of the earth trough (20) and the peripheral wall (33) of which is perforated with at least one hole (34) through which can pass a wick (22) that, on the one hand, extends inside the earth trough (20) and, on the other hand, plunges into the water tank (17) and capable of allowing the passing through of air through the inner wall (5).

2. Window box arrangement (1) according to claim 1, **characterised in that** the outer wall (6) is completed with means (26) capable of defining said upper level (18) of the water by forming an overflow for evacuating its quantity in excess.

3. Window box arrangement (I) according to claim 2, **characterised in that** the means (26) capable of defining said upper level (18) of the water are formed by at least one drainage hole provided for in said outer wall (6) and located below the level (27) of the bottom (7) of the inner wall (5), at a determined distance (19) from this bottom (7).

4. Window box arrangement (1) according to claim 2, **characterised in that** the means (26) capable of defining said upper level (17) of the water are formed by at least one water-supply hole (25) located, at least partly, below the level (27) of the bottom (7) of the inner wall (5) and at a determined distance (19) from this bottom (7).

5. Window box arrangement (1) according to any of the preceding claims, **characterised in that** said hole (25) results from a removal of material carried out at the level of the outer wall (6) of the window box arrangement (1), after its rotational moulding.

6. Window box arrangement (I) according to any of the preceding claims, **characterised in that** said hole (25) is delimited by a portion (28) of said outer wall (6) that has been indexed, weakened and/or previously cut out.

7. Window box arrangement (1) according to any of the preceding claims, **characterised in that** said window box arrangement (1) includes, in its lower portion (29) and at the level of its outer wall (6), a peripheral excrescence (30) extending at the level of at least one side of said outer wall (6) and including, at the top (31), at least one water-supply opening (25).

8. Window box arrangement (1) according to claim 7, **characterised in that** said peripheral excrescence (30) has overall dimensions substantially larger than those of the outer wall (6) of the window box arrangement (1), in order to reserve, when two window box arrangements are juxtaposed, sufficient space between the latter to ensure the filling of their water tanks (17).

9. Window box arrangement (1) according to any of claims 7 or 8, **characterised in that** said peripheral excrescence (30) extends over the full periphery of said outer wall (6) and substantially adopts the shape of a cup, a dish or the like.
